# EUROPEAN PATENT SPECIFICATION

(11) **EP 4 176 507 B1**
(45) Date of publication and mention of the grant of the patent: **21.08.2024**
(21) Application number: 20768587.6
(22) Date of filing: 08.09.2020
(51) Int. Cl.: H02J 7/02, B60L 53/24, H02M 1/42

(54) **ON-BOARD CHARGER FOR VEHICLE BATTERY AND METHOD OF CHARGING AND USING VEHICLE BATTERY**
BORDLADEGERÄT FÜR FAHRZEUGBATTERIE UND VERFAHREN ZUM LADEN UND VERWENDEN EINER FAHRZEUGBATTERIE
CHARGEUR EMBARQUÉ POUR BATTERIE DE VÉHICULE ET PROCÉDÉ DE CHARGE ET D'UTILISATION DE BATTERIE DE VÉHICULE

(43) Date of publication of application: 10.05.2023
(73) Proprietor: Huawei Technologies Co., Ltd., Shenzhen, Guangdong 518129 (CN)
(72) Inventor: FACANHA DE OLIVEIRA, Eduardo, 80992 Munich (DE)
(74) Representative: Grünecker Patent- und Rechtsanwälte PartG mbB
(86) International application number: PCT/EP2020/075076
(87) International publication number: WO 2022/053125

(56) References cited:
- WO-A1-2019/199964
- WO-A2-2015/192133
- FR-A3- 2 937 803
- US-A1- 2017 057 368
- US-A1- 2019 184 833
- US-B1- 10 562 404

## Description

### TECHNICAL FIELD

The disclosure relates generally to on-board chargers for batteries of electric vehicles, and in particular to integrated on-board chargers. Moreover, the disclosure also relates to methods of charging a battery of an electric vehicle, and using a vehicle battery for powering external loads.

### BACKGROUND

With development in technology, the production and the use of battery-powered electric vehicle (such as electric cars, electric motorcycles, electric planes, and electric ships) has increased. Compared to vehicles powered by internal combustion engines (such as petrol and diesel cars), battery powered electric vehicles suffer from the disadvantage that "refuelling" requires access to specialised charging stations that are not only sparsely distributed but also considerably slower to completely "refuel" the vehicle. Among the constraints limiting the extensive deployment of charging stations is the fact that different vehicles have different charging requirements in terms of charging rate, type of current (direct current (DC) supply or alternating current (AC)), and voltage. Ultimately, a vehicle battery needs to be connected to a source of direct current in order to be charged. DC charging stations can provide such a source of direct current, but such DC charging stations tend to be expensive to install. In order to be able to use an AC charging station, a battery powered electric vehicle requires an on-board facility to convert alternating current from the charging station into direct current to charge the vehicle's battery. Such an on-board facility is known as an on-board charger. Documents US 10562404 and FR 2937803 are examples of said state of the art.

Although the provision of an on-board charger enables a vehicle to charge it's battery from an AC charging station, the cost of the on-board charger necessarily increases the build cost of the vehicle, and also the on-board charger adds weight and takes up space inside the vehicle. The desire to enable quick "refuelling" means that there is pressure to provide enhanced on-board chargers although these tend to be both bulkier and more expensive than chargers only capable of a relatively slow rate of charge. For example, the increased cost of such chargers may come from the need to provide components capable of handling larger currents, and/or from the need to increase component count.

Integrated on-board chargers, which utilise for charging purposes some components that are also used in traction mode, have been developed to meet the demand for high charging rates and/or to save weight, volume and cost from the usual on-board chargers. However, such integrated on-board chargers tend to require additional costly high frequency semiconductors for charging. Furthermore, since they are commonly non-isolated circuits, the Common-Mode Voltage (CMV) generated across the poles of the battery of the electric vehicle plays an important role in the design of such chargers. For instance, the presence of high-frequency CMV leads to the need for extensive Electromagnetic Interference (EMI) filtering due to the generated leakage current through the parasitic capacitance between the battery poles and the vehicle chassis, which in turn is grounded during charging events. In addition, some integrated on-board chargers generate shaft torque on the AC machine during charging, meaning that a heavy duty electric parking brake may be required. Thus, there exists the problem of how to provide a cost-effective on-board charger which has high charging rates while avoiding some or all of the aforementioned disadvantages.

Therefore, in light of the foregoing discussion, there exists a need to overcome one or more of the aforementioned drawbacks associated with known integrated on-board chargers.

### SUMMARY

An object of the disclosure is to provide a solution that overcomes at least partially the problems encountered in prior art integrated on-board chargers.

The object of the disclosure is achieved by the solutions provided in the enclosed independent claims. Advantageous implementations of the disclosure are further defined in the dependent claims.

It will be appreciated that features of the disclosure are susceptible to being combined in various combinations without departing from the scope of the disclosure as defined by the appended claims.

Additional aspects, advantages, features and objects of the disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the disclosure, exemplary constructions of the disclosure are shown in the drawings. However, the disclosure is not limited to specific methods and instrumentalities disclosed herein. Moreover, those in the art will understand that the drawings are not to scale. Wherever possible, like elements have been indicated by identical numbers.

Embodiments of the disclosure will now be described, by way of example only, with reference to the following diagrams wherein:
FIG. 1 is an illustration of a block diagram of an electric vehicle, in accordance with an example of the disclosure;
FIG. 2 is an illustration of a block diagram depicting an exemplary implementation of the on-board charger of FIG. 1, in accordance with an example of the disclosure;
FIG. 3 is an illustration of a circuit diagram corresponding to the on-board charger of FIG. 2, in accordance with an example of the disclosure;
FIGs. 4-7 are illustration of circuit diagrams depicting exemplary implementation of on-board chargers, in accordance with various examples of the disclosure;
FIGs. 8A-B are illustration of a graph that depicts Common-Mode Voltage (CMV) on a negative battery pole respectively for a known integrated on-board charger and for an on-board charger of the present, in accordance with an example of the disclosure;
FIG. 9a and 9b are illustration of on-board chargers having bidirectional power flow capacity, in accordance with examples of the disclosure;
FIG. 10 is an illustration of a circuit diagram of an on-board charger configured to operate from a single-phase AC power source, in accordance with an example of the disclosure;
FIG. 11 is an illustration of a circuit diagram of an on-board charger configured to operate from a DC power source, in accordance with an example of the disclosure;
FIGs. 12A-12C are illustration of circuit diagrams representing various arrangements for DC/DC converters for an on-board charger, in accordance with various example of the disclosure;
FIGs. 13A and 13B are illustrations of circuit diagrams of non-isolated DC/DC converters, in accordance with various examples of the disclosure;
FIG. 14 is an illustration of a circuit diagram of an isolated DC/DC converter, in accordance with an example of the disclosure;
FIG. 15 is an illustration of a circuit diagram of an on-board power supply DC/DC converter, which acts as an interface between a high voltage battery and a low voltage battery in an electric vehicle, merged into the isolated DC/DC converter of FIG. 14, in accordance with an example of the disclosure;
FIG. 16, illustrated are alternative circuit configurations suitable for use as a low frequency bridge leg of an integrated active filter, in accordance with an example of the disclosure;
FIG. 17 is an illustration of a circuit diagram of an on-board charger module in accordance with an example of the disclosure;
FIG. 18 is a flowchart of a method of charging a battery of an electric vehicle, in accordance with an example of the disclosure; and
FIG. 19 is a flow chart of using a battery of an electric vehicle as a power source for powering external loads, in accordance with an example of the disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the disclosure and ways in which they can be implemented. Although some modes of carrying out the disclosure have been disclosed, those skilled in the art will recognize that other embodiments for carrying out or practicing the disclosure are also possible.

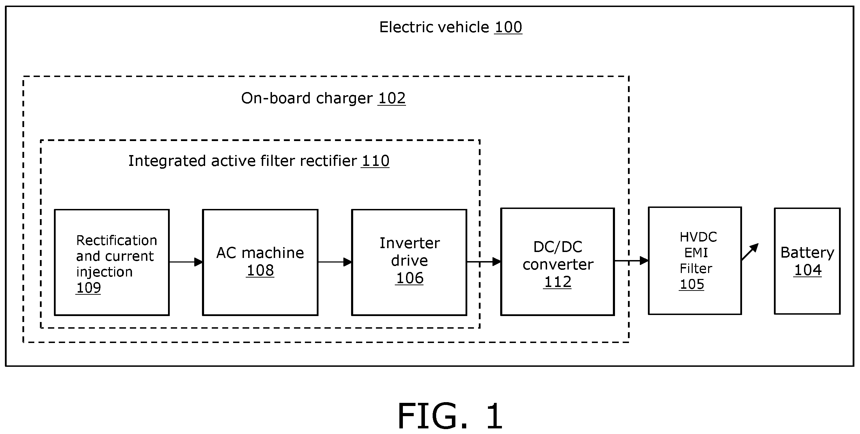

FIG. 1 is a block diagram of a battery-powered electric vehicle **100,** in accordance with an embodiment of the disclosure. FIG. 1 mainly illustrates various elements of the electric vehicle **100** associated with two primary functions, i.e. a charging mode and a traction or propulsion mode, of the electric vehicle **100.** As shown, the electric vehicle **100** includes an on-board charger **102,** a battery **104,** an inverter drive **106** and an AC machine **108.** The battery **104** interfaces to the rest of the components of the system through a high voltage DC EMI filter **105.** The on-board charger **102** and the battery **104** operate together during the charging mode. Whereas the battery **104,** the inverter drive **106** and the AC machine **108,** operate together in the traction mode. Moreover, as shown, the on-board charger **102** includes an integrated active filter rectifier **110** coupled to a DC/DC converter **112.** The integrated active filter rectifier **110** includes rectification and current injection functions **109,** and, as will be explained, also makes use of elements of the AC machine **108,** and the inverter drive **106.**

The on-board charger **102** of the disclosure is an integrated on-board charger. The term "*integrated on-board charger*" used herein refers to the integrated nature of the on-board charger **102.** In other words, the on-board charger **102** is not a separate unit operable only to charge the battery **104,** rather the on-board charger **102** is configured to operate in association with other elements, such as the inverter drive **106** and the AC machine **108,** of the electric vehicle **100,** that are also used for purposes other than charging the vehicle battery. Therefore, in FIG. 1, the integrated nature of the on-board charger **102** is depicted with the help of dotted lines surrounding the on-board charger **102** which is shown as including the inverter drive **106** and the AC machine **108.** The on-board charger **102,** including the inverter drive **106** and the AC machine **108,** is configured to perform power factor correction of an AC supply while charging the battery **104.** Specifically, the integrated active filter rectifier **110** of the on-board charger **102** is configured to use at least one phase inductor of the AC machine **108** and at least one leg of the inverter drive **106** to perform power factor correction, which is explained in greater detail herein later.

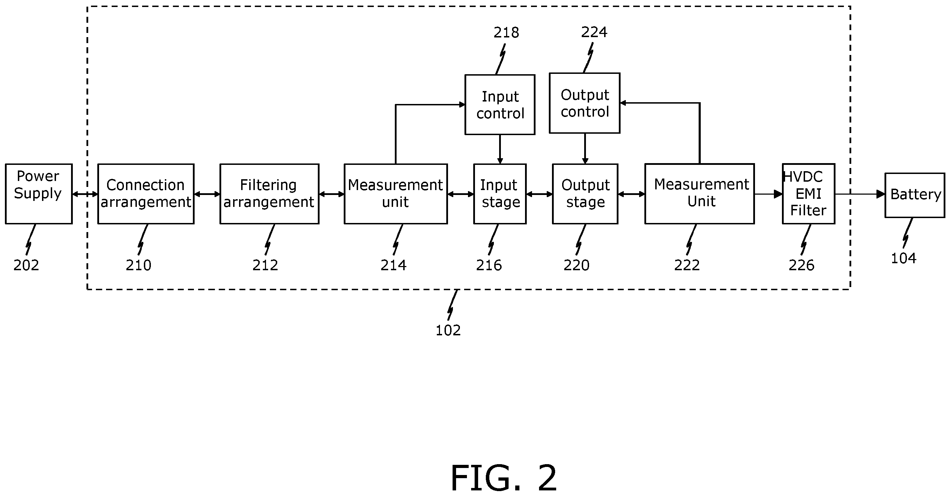

Referring now to FIG. 2, illustrated is a block diagram depicting an exemplary implementation of the on-board charger **102** of FIG. 1, in accordance with an embodiment of the disclosure. As shown, the on-board charger **102** can be electrically coupled to a power source **202,** such as a power supply network, for drawing electrical power for charging the battery **104.** The power supply **202** is advantageously an alternating current three-phase power supply network. Alternatively, as will be explained later, the power supply **202** may be direct current or an alternating current single-phase power supply.

The on-board charger **102** includes a connection arrangement **210** for electrically coupling the on-board charger **102** with the power supply **202.** In an example, the connection arrangement **210** may be a charging plug configured to supply electrical power from the power supply **202.** For example, the connection arrangement **210** is configured to connect the integrated active filter rectifier **110,** shown in FIG. 1, to a single-phase or three-phase AC power supply or to a DC power supply network.

The on-board charger **102** also includes a filtering arrangement **212** comprising an AC electromagnetic interference (EMI) filter, operable to attenuate high frequency electromagnetic noise present on power and signal lines. Specifically, the filtering arrangement **212** is operable to reduce electromagnetic interference produced by various operating components of the on-board charger **102,** for example caused by the switching of the semiconductor switches of the on-board charger **102.**

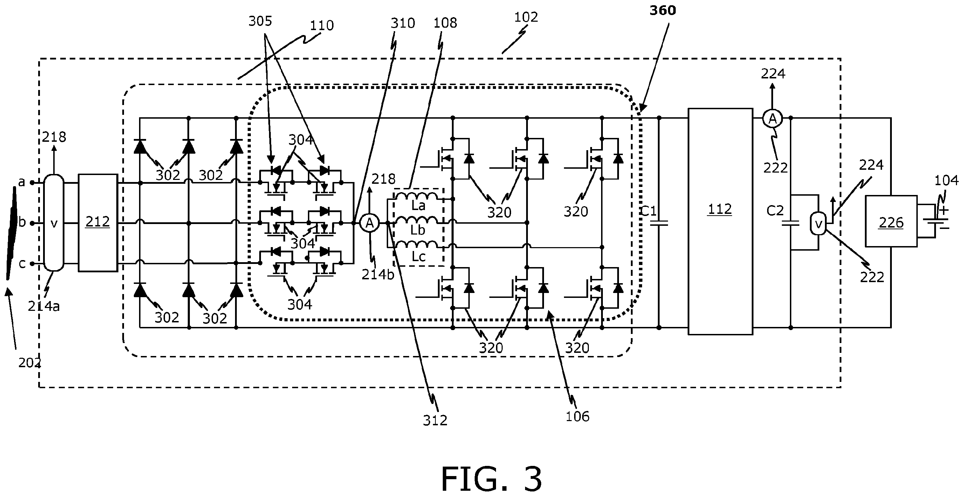

The on-board charger **102** further includes a measurement unit **214** operable to measure current through the inductors of the AC machine **108.** As shown, the on-board charger **102** also includes an input stage **216** electrically or operatively coupled to the measurement unit **214.** The term "*input stage*" used herein refers to an arrangement of electrical elements or components responsible for regulating current drawn from the power supply network. According to the disclosure, the input stage **216** of the on-board charger **102** is constituted by the integrated active filter rectifier **110,** including elements of the inverter drive **106** and of the AC machine **108,** shown in the FIG. 1 and will be better shown and explained in conjunction with FIG. 3. This arrangement of the input stage **216** illustrates the integrated nature of the on-board charger **102** of the disclosure.

As shown in FIG. 2, the on-board charger **102** also includes an input control **218** for the regulation of the current to be provided by the input stage **216** while charging the battery **104.** The input control **218** operates on measurement data received from the measurement unit **214,** and regulate the operation of the various components of the input stage **216,** thereby regulating the input current drawn from the external power supply **202.** In other words, the input control **218** acts as a regulator of the current through the inductors **108** of the AC machine) of the input stage **216.** In an example, the input control **218** may include components, such as a controller programmed in a manner, to provide control signals for controlling operations of the various components of the input stage **216** to provide desired regulation of the current provided to the input stage **216.**

The output current from the input stage **216** is received by an output stage **220** of the on-board charger **102.** The on-board charger **102** also includes a measurement unit **222** and an output control **224** associated with the output stage **220.** According to the disclosure, the output stage **220** includes the DC/DC converter **112,** shown in FIG. 1. Moreover, the output control **224** is operable to generate control signals, based on measurement data of the measurement unit **222,** for controlling operations of various components of the output stage **220.** This allows the output stage **220** to provide a current output required for efficient charging of the battery **104,** which is explained in greater detail in conjunction with FIG. 3.

Referring now to FIG. 3, illustrated is a circuit diagram corresponding to the on-board charger **102** of FIG. 2, in accordance with an embodiment of the disclosure. As shown, the on-board charger **102** is arranged to be coupled to a 3-phase AC power supply **202** for drawing electrical power for charging the battery **104.** The on-board charger **102** includes an integrated active filter rectifier **110** which corresponds to the input stage **216** of Figure 2, and a DC/DC converter **112** that corresponds to the output stage **220** of Figure 2. The active filter rectifier **110** includes the AC machine 108 and the inverter driver 106. The on-board charger **102** also includes the measurement unit **214** and the measurement unit **222,** associated with the input stage **216** and the output stage **220,** respectively. The measurement unit **214** is divided into a first part, **214a,** which monitors the input voltage upstream of rectifiers **302,** and a second part, **214b,** which monitors current downstream of the rectifiers **202.** The measurement unit **214** is associated with the input control **218,** shown with an arrow, representing connection between the measurement unit **214** and the input control **218** (such as the controller). The measurement unit **214** and the input control **218** are in use coupled to the power supply **202.** The measurement unit **222** is associated with the output control **224,** shown with an arrow, representing connection between the measurement unit **222** and the output control **224** (such as the controller).

In one exemplary configuration, the input stage is constituted by an integrated active filter rectifier **110** that comprises one pair of diodes **302** for each phase of a three-phase mains power supply and a third harmonic current injection circuit **360.** The third harmonic current injection **circuit 360** comprises the fast-commuted switches **320,** the inductors **108** of the AC machine, and the low-frequency bidirectional switches **304.** Notably, the integrated active filter rectifier **110** includes three branches, each branch connectable to one phase of a three-phase mains power supply, i.e. the power supply network **202.**

Each of the three branches includes a pair of diodes **302** and a pair of active power switches **304.** The pair of active power switches **304** are connected in anti-series. Therefore, the integrated active filter rectifier **110** includes three low frequency bridge legs, wherein each low frequency bridge leg is composed of two active power switches **304** having antiparallel diodes **305** and two diodes **302,** with the two active power switches **304** connected with the two diodes **302.** According to an embodiment, each of the plurality of active power switches **304** comprises a MOSFET device, and the diodes **305** are provided by intrinsic body diodes of the MOSFET devices. The skilled person will appreciate that, in this arrangement, the intrinsic diode provided by a MOSFET device is used in place of a stand-alone diode **305,** and the intrinsic diode is connected in parallel to the MOSFET device. In another embodiment, the plurality of active power switches **304** may include another transistor device, such as insulated-gate bipolar transistor (IGBT), instead of the MOSFET device.

As previously explained, the on-board charger **102** also includes the AC machine 108 and the inverter drive **106.** The AC machine **108** and the inverter drive **106** are the primary elements of an electrical vehicle, and are associated with the traction mode of the electrical vehicle. The AC machine **108** will typically be a three-phase AC motor, including an arrangement of three phase inductors **La, Lb** and **Lc.** As shown, the AC machine **108** is coupled to the inverter drive **106.**

In one embodiment, the inverter drive **106** includes six active power switches **320.** The active power switches **320** of the inverter drive **106** may be similar to the active power switches **304** of the integrated active filter rectifier **110.** For example, each of the active power switches **320** comprises a transistor device and a diode connected in parallel to the transistor device. Further, the transistor device may be a MOSFET device, with the diode optionally being an intrinsic body diode of the MOSFET, or an IGBT.

As shown, the on-board charger **102** also includes an output stage **220,** which primarily comprises the DC/DC converter **112.** The on-board charger **102** further includes a first capacitor **C1** connected across an input of the DC/DC converter **112** and a second capacitor **C2** connected across an output of the DC/DC converter **112.** The first capacitor **C1** is configured to support commutation of the active power switches **320** of the inverter drive **106** and to provide the necessary current path for the imposed injection current through the inductors **108.** Capacitor **C1** provides power to the power switches **320** during the moments when there is insufficient voltage difference between the phases of the alternating current mains supply to forward bias through any of the rectifier diodes **302.** To ensure sinusoidal controllability of the mains currents, the output voltage of the integrated active filter rectifier **216** should be determined directly by the diode bridge rectifier **302** and hence exhibits a six-pulse shape. This sets an upper limit on the size of capacitor **C1** for proper converter operation. The first capacitor **C1** presents a small capacitance, typically of a few tens to a few hundreds of microfarads.

When the on-board charger **102** is used for charging the battery **104,** the integrated active filter rectifier **110** receives electrical power from the power supply **202,** thereafter an output of the integrated active filter rectifier **110** is fed to the DC/DC converter **112,** and then an output of the DC/DC converter **112** is supplied to the battery **104** for charging. The integrated active filter rectifier **110** is configured to use at least one phase inductor **(La, Lb,** or **Lc)** of the AC machine **108** and at least one leg (i.e. one of the three branches having the pair of active power switches **320)** of the inverter drive **106** to perform power factor correction of an AC supply. As shown, the phase inductors **La, Lb, Lc** are coupled to first, second and third branches of the inverter drive **106,** respectively, each branch carrying the pair of active power switches **320.**

It will be evident that when power supply network **202** is a three-phase AC power supply network, for each phase, each leg of the input stage **216** comes into operation sequentially (for charging the battery **104).** Each leg may be constituted by the pair of diodes **302** connected to the pair of active power switches **304** of the integrated active filter rectifier **110.**

According to an embodiment, during three-phase operation, the active power switches **304** (i.e. current injection switches) of the integrated active filter rectifier **110** are modulated at a frequency of twice the mains frequency, i.e. two-times the frequency of the three-phase AC power supply network **202.** For example, each of these active power switches **304** conducts during 120° within a 360° mains period, in such a way that active current injection always occurs into only one of the three mains phase. In conjunction with the active power switches **304** and the phase inductors **La** or **Lb** or **Lc** (i.e. one of the mains phases), the active power switches **320** (i.e. high frequency inverter drive bridges constituted by each branches) of the inverter drive **106** are commutated at high frequency. This allows the active power switches **320** of the inverter drive **106** to work as a dedicated current injection converter, which serves as an active harmonic filter for achieving sinusoidal input currents. Notably, the active power switches **320** of the inverter drive **106** function as high frequency Pulse Width Modulation (PWM) bridge for current regulation, therefore no additional costly high frequency power semiconductors are needed for that. Additionally, the phase inductors **La** or **Lb** or **Lc** of the AC machine **108** acts as current injection inductor. Further, the output voltage of the integrated active filter rectifier **110** exhibits a six-pulse shape, determined directly by the diode bridge rectifier (i.e. the diodes **302).** Further, the DC/DC converter **112** provides voltage regulation and dynamic current limitation to the battery **104.** Furthermore, the DC/DC converter **112** controls a constant output current (constant power demand) in order to assure high power factor operation.

Notably, the on-board charger **102** includes a control scheme having two control loops. For example, one control loop constituted by the measurement units **214a** and **214b,** and the input control **218** for regulating the current injected back into the mains phases by the active power switches **320** of the inverter drive **106** and the phase inductors La or **Lb** or **Lc** of the AC machine **108.** Typically, the input control **218** is operable to generate control signals, based on the measurement data of the measurement units **214a** and **214b** for controlling operation of the active power switches **304** and **320** of the third harmonic current injection circuit **110.** Further, a second control loop constituted by the measurement unit **222** and the output control **224** for regulating the output current of the DC/DC converter **112.** Typically, the output control **224** is operable to generate control signals, based on the measurement data of the measurement unit **214** for controlling the output current of the DC/DC converter **112.** Typically, based on the control signals provided by the output control **224** a constant output current (in order to assure high power factor operation) is provided by the DC/DC converter **112** for charging the battery **104.**

The on-board charger **102** may also be used for powering external loads using the battery **104** as a power bank. Typically, the on-board charger **102** or various elements thereof is passively used for powering external loads.

In an embodiment, the external loads may be a single-phase or three-phase AC load, or a DC load. For powering the external load using the battery **104,** an input of the integrated active filter rectifier **110** is coupled to the external load, an output of the integrated active filter rectifier **110** is fed from an input of the DC/DC converter **112,** and an output of the DC/DC converter **112** is supplied from the battery **104.** Further, during powering the external loads, the integrated active filter rectifier **110** is configured to use at least one phase inductor **La, Lb, Lc** of the AC machine **108** and at least one leg (i.e. one of the three branches having the pair of active power switches **320)** of the inverter drive **106** to perform power factor correction.

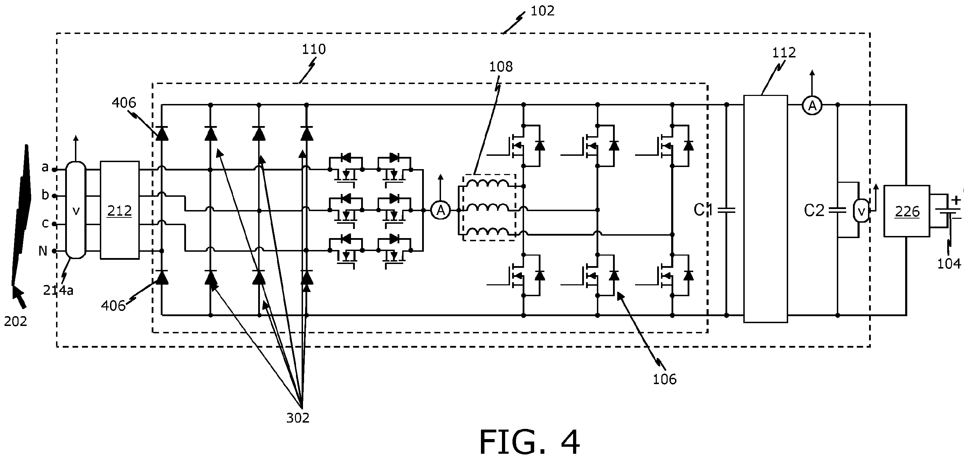

Referring now to FIG. 4, illustrated is a circuit diagram depicting an exemplary implementation of an on-board charger **102,** in accordance with an embodiment of the disclosure. The on-board charger **102** is similar to the on-board charger **102,** shown and explained in conjunction with FIG. 3. The on-board charger **102** is operable to charge the battery **104** using a power supply network, such as a three phase AC power supply network having a neutral phase (or wire) **N.** The integrated active filter rectifier **110** of the on-board charger **102** is shown to include a pair of diodes **406** connected to the neutral wire **N** in parallel. The pair of diodes **406** is configured to be a fourth branch used only in single -phase and DC operations (as they are not needed for three-phase operation).

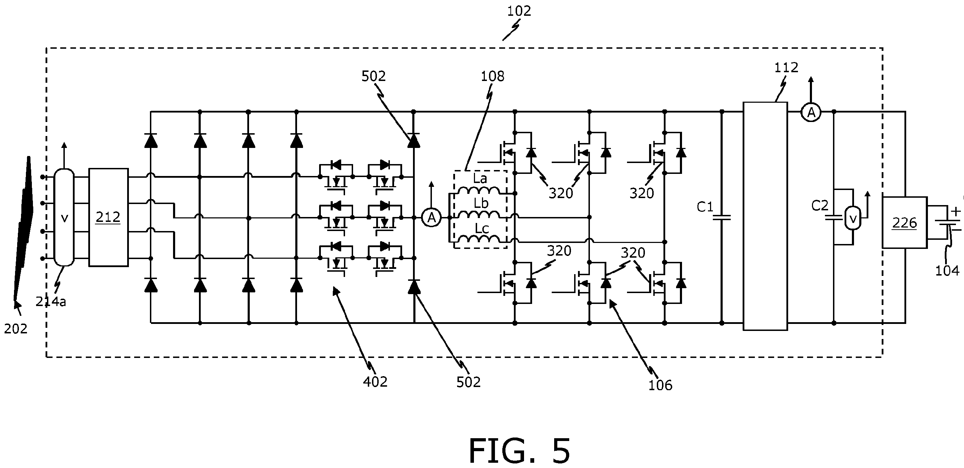

Referring now to FIG. 5, illustrated is a circuit diagram depicting an exemplary implementation of an on-board charger **102,** in accordance with another embodiment of the disclosure. The on-board charger **102** is similar to the on-board chargers shown and explained in conjunction with FIGs. 3 and 4. As shown, the on-board charger **102** includes a pair of free-wheeling diodes **502** placed as supplementary protection to the current injection switches **320** of the inverter drive **106.** This offers an operating safety level in the event of any drift or loss of control. In practice, the pair of free-wheeling diodes **502** enables blocking of the current injection switches **320,** so that the current from the phase inductors **La, Lb, Lc** can then continue to circulate through one of the pair of free-wheeling diodes **502.** Ideally, the pair of free-wheeling diodes **502** never conduct.

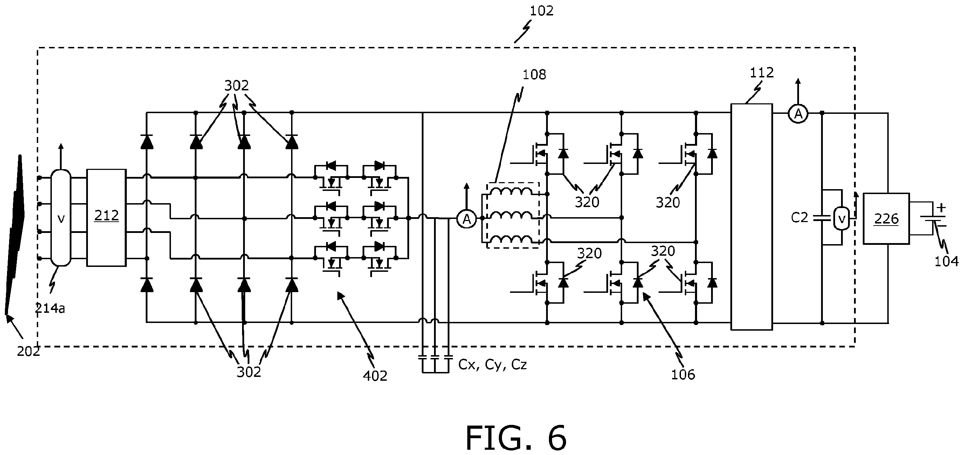

FIG. 6 is a circuit diagram depicting an exemplary implementation of an on-board charger **102,** in accordance with another embodiment of the disclosure. The on-board charger **102** is similar to the on-board chargers shown and explained in conjunction with FIGs. 3 and 4. As shown, the on-board charger **102** includes capacitors **Cx, Cy** and **Cz** on the DC side (i.e. these are input filter capacitors that would otherwise normally be part of the AC EMI filter **212).** It is to be understood that capacitor **Cx, Cy** and **Cz** substitute for the capacitor **C1** (shown in FIG. 3) connected across the input of the DC/DC converter **112.** This enables the commutation paths of the buck converter **112** and the injection switches **320** of the inverter drive **106** to be shortened, as well as reducing the conduction losses due to the reduction of the current ripple through the input diode bridges constituted by the diodes **302** of the integrated active filter rectifier **110.**

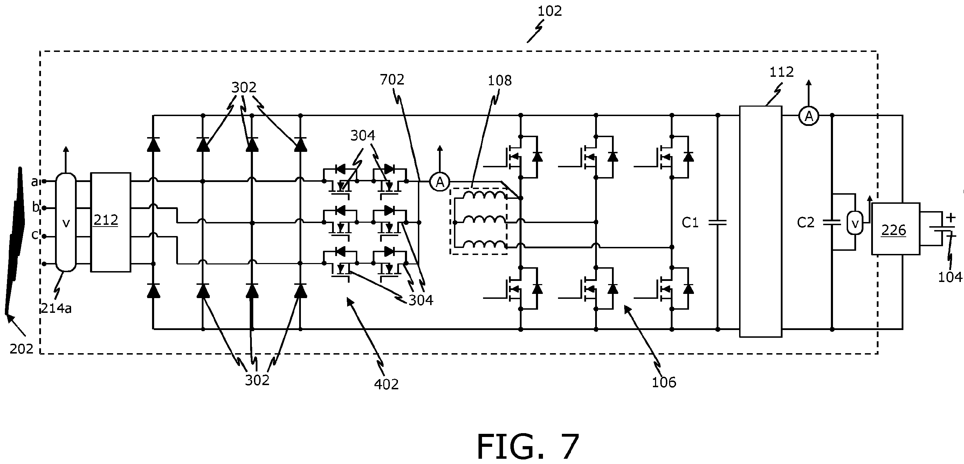

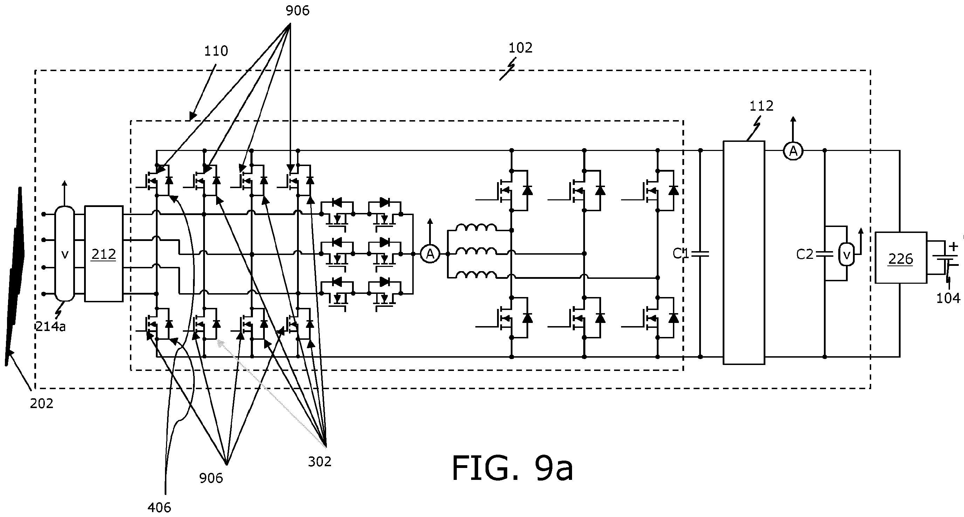

FIG. 7 is a circuit diagram depicting an exemplary implementation of an on-board charger **102,** in accordance with another embodiment of the disclosure. The on-board charger **102** is similar to the on-board chargers shown and explained in conjunction with FIGs. 3 and 4. As shown, the integrated active filter rectifier **110** includes a pair of diodes **302** (or active power switches, as shown in FIG. 9a) belonging to one branch for each phase of a three-phase **a, b, c** mains power supply. Further, each of the pair of diodes **302** (or active power switches, as shown in FIG. 9a) are coupled together at a common point **702,** and the common point **702** is coupled to one of the phase inductors **(La, Lb, Lc)** of the AC machine **108.** In other words, the common point **702** of the active power switches **304** is connected to one of the phase inductor **La, Lb, Lc,** whose corresponding bridge does not operate during the charging mode. The main advantage of this construction is that the access to the motor neutral point **312** (shown in FIG. 3) is not required.

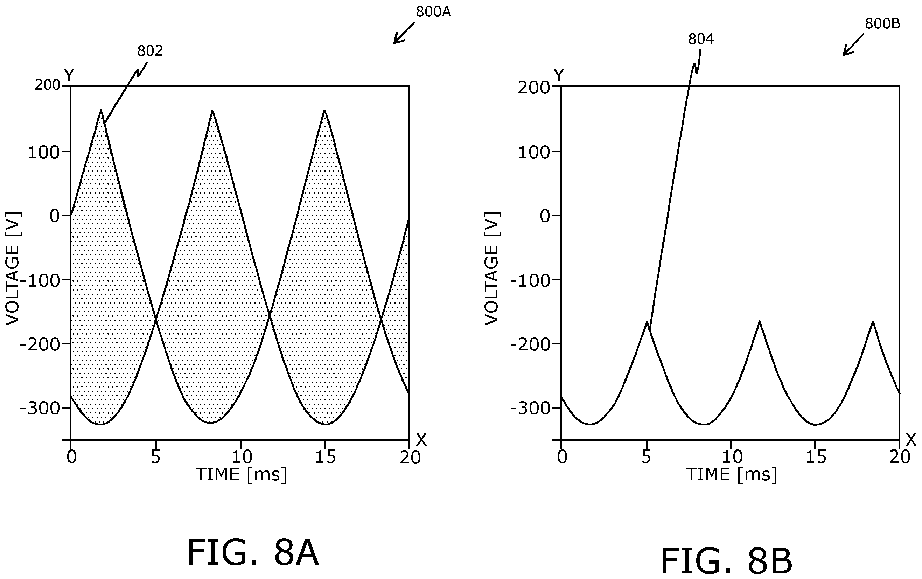

Referring now to FIG. 8A, illustrated is a graph that depicts Common-Mode Voltage (CMV) on a negative battery pole for a known integrated on-board charger (not shown). FIG. 8A is a graphical representation **800A** of a Common-Mode Voltage (CMV) pattern with respect to time. As shown, the plot **800A** represents time (in milliseconds) on the X-axis and values of Common-Mode Voltage (in volts) on the Y-axis. The plot **800A** represents a CMV waveform **802** of the known integrated on-board charger. It will be appreciated that the existence of high frequency components in the CMV waveform **802** on the negative pole of the vehicle battery will require very strong Electromagnetic Interference (EMI) filtering to be incorporated into the known integrated on-board charger.

Referring now to FIG. 8B, illustrated is a graph that depicts Common-Mode Voltage (CMV) on a negative battery pole for an on-board charger of the disclosure (such as the on-board charger **102),** in accordance with an embodiment of the disclosure. FIG. 8B is a graphical representation **800B** of a Common-Mode Voltage (CMV) pattern with respect to time. As shown, the graphical representation **800B** represents time (in milliseconds) on the X-axis and values of Common-Mode Voltage (in volts) on the Y-axis. The graphical representation **800B** represents a CMV waveform **804** of the on-board charger of the disclosure, according to various embodiments shown and explained herein above. It will be appreciated that the absence of high frequency components in the CMV waveform **804** imposes a very much lower requirement for EMI filtering for the on-board charger of the disclosure in comparison to the known on-board charger whose CMV is shown in FIG. 8A.

In addition to the above, the on-board charger (shown and explained herein above) of the disclosure enables the reduction of the overall losses as compared to known integrated on-board chargers. Typically, with the on-board charger of the disclosure, the PWM contribution (provided by the active power switches of the inverter drive) represents only a small fraction, for example of only 6%, of the total delivered energy. Notably, a major part of the energy is delivered via the rectifier diodes (such as diodes **302** of the integrated active filter rectifier **110)** without having switching losses. Therefore, low cost high efficiency Si-based devices can be used here in conjunction with the on-board charger of the disclosure. Further, the same reasoning is valid for the current through the AC machine **108,** whose RMS value represents less than 14% of the RMS phase current consumed from the grid, corresponding to up to 44% lower copper losses as compared to a known integrated on-board charger.

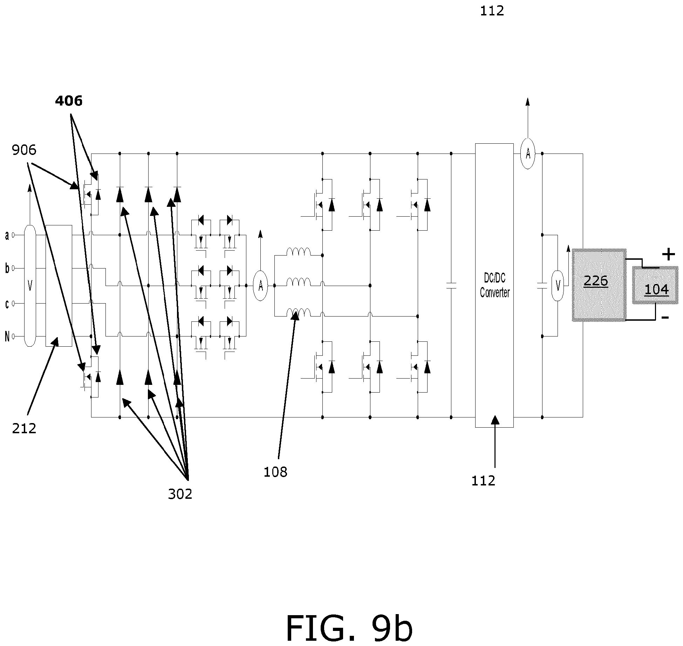

Referring now to FIG. 9a, illustrated is an on-board charger **102** configured for bidirectional power flow, in accordance with an embodiment of the disclosure. The on-board charger **102** is similar to the on-board chargers **102,** shown and explained in conjunction with FIGs. 3 and 4. However, as shown the in FIG. 9, the integrated active filter rectifier **110** includes active power switches **906** at the position of the diodes **302,** as shown in FIGs. 3 and 4. The Figure shows each active power switch **906** having a diode connected in parallel with a transistor. Optionally, each active power switch **906** may be a metal oxide semiconductor field effect transistor (MOSFET device). If the active power switches are MOSFETs, the parallel connected diodes may be provided by intrinsic body diodes of the MOSFET devices.

In another embodiment, instead of replacing the diodes **302** with MOSFETs, a bipolar transistor device is arranged in parallel with each of the diodes **302.** The bipolar transistor devices may conveniently be insulated-gate bipolar transistors (IGBTs).

Additionally in Figure 9a, the DC/DC converter **112** is a bidirectional device to support bidirectional power flow. By using active power switches **906,** instead of simply diodes **302,** and bidirectional DC/DC converter **112,** power can be drawn from the vehicle battery **104** through the on-board charger. So with this arrangement, the vehicle battery **104** can be used as a power bank for powering external electrical or electronic devices.

Figure 9b is based on Figure 4, and shows the addition of a switch 906 in parallel only with the diodes 406, and not with the other diode rectifiers 302. The elimination of the switches 406 in parallel with the diode rectifiers shown in Figure 9a reduces cost and component count, but is still sufficient to enable bidirectional current flow and in particular the use of the vehicle battery as a power bank to supply single-phase AC to an external load.

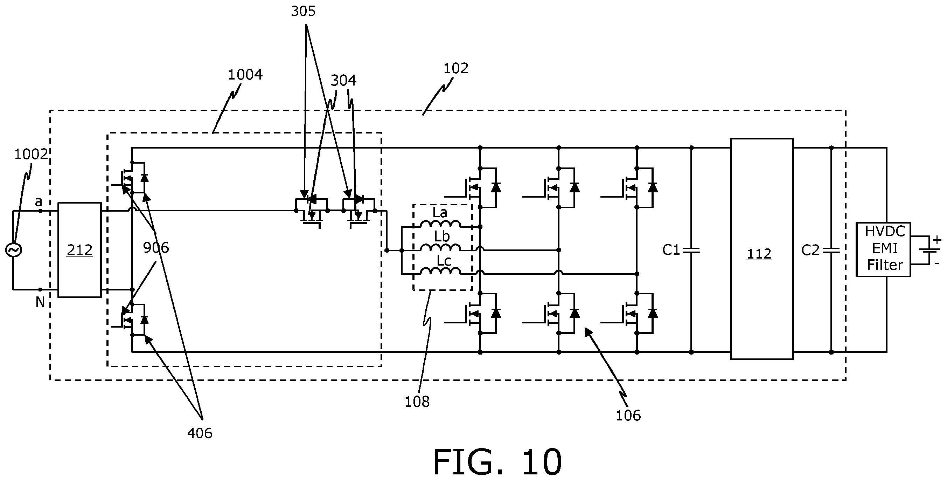

FIG. 10 is a simplified and partial circuit diagram of an on-board charger **102** in accordance with an embodiment of the disclosure configured to connect to a single-phase AC power source to charge the vehicle battery, and to allow bidirectional power flow. The on-board charger **102** is configured to support charging from a single-phase AC power supply **1002** by using elements of the integrated active filter rectifier (such as the integrated active filter rectifier **110,** shown in FIG. 9) as a bridgeless totem-pole power factor correction rectifier. Typically, the on-board charger **102** includes a control arrangement (not shown) such as the input control **218,** to modulate at least one leg, such as a leg constituted by active power switches **304,** of the inverter drive **106** at high frequency to generate a sinusoidal current through a corresponding phase inductor **La, Lb,** or **Lc** of the AC machine **108.** It will be appreciated that the circuit shown in Figure 9 represents a configuration to which an on-board charger as shown in earlier Figures can be switched when it is desired to charge the battery of a vehicle from a single-phase AC supply rather than from a 3-phase AC supply, rather than being an alternative form of charger.

As shown, the power supply network **1002** is connected between neutral and one of the phases (such as phase **a**). The active power switches (bidirectional switches) **304** of the connected phase are turned-on, so that the path between this phase 'a' and the neutral of the AC machine **108** is short-circuited. An interleaved operation of the three legs of the inverter drive **106** is beneficial regarding conduction losses and ripple reduction of the injected current. To enable the supply of an AC load or the injection of current into the grid active power switches **906** are used in parallel with the rectifiers **406.** The active power switches **906** can as well be used to improve efficiency by means of synchronous rectification during charging.

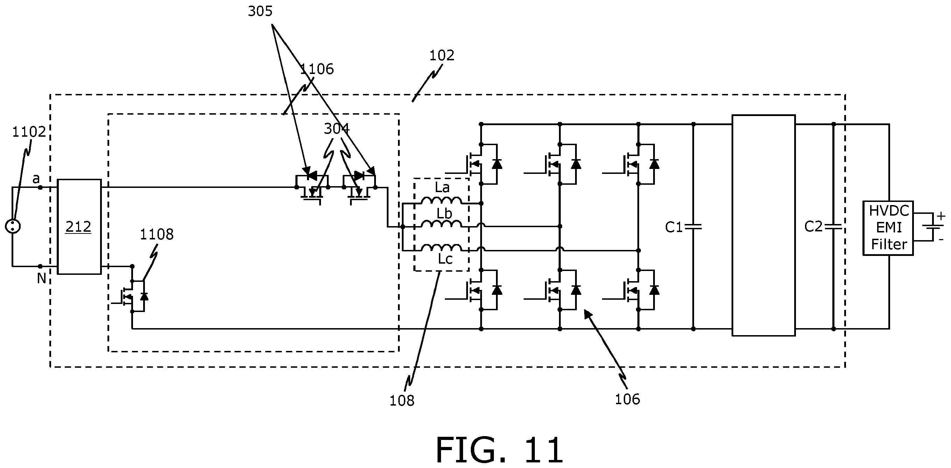

FIG. 11 is a simplified and partial circuit diagram of an on-board charger **102** in accordance with an embodiment of the disclosure configured to use a DC power source to provide charging current to the vehicle battery, and to allow bidirectional power flow, in accordance with an embodiment of the disclosure. The on-board charger **102** is configured to support charging from a DC power supply **1102** by using elements of the integrated active filter rectifier **110** as a DC/DC converter. Further, the on-board charger **102** includes a control arrangement (not shown, such as the input control **218** shown in FIG. 2) to modulate at least one leg (such as a pair of active power switches belonging to one branch of the inverter drive **106)** of the bridge at high frequency to control a direct current through a corresponding phase inductor (such as the phase inductors **La, Lb, Lc)** of the AC machine **108.**

As also shown in FIG. 11, the DC power supply **1102** is connected between two input terminals **a** and **N.** The active power (or bidirectional) switches **304** of the connected phase are turned-on, so that the path between the connected phase and a neutral point (or a common point in which all the phase inductors **La, Lb, Lc)** of the AC machine **108** is short-circuited. Further, at least one leg of the three-phase bridge (i.e. one of the three branches of the inverter drive **106)** is modulated at high frequency to control the DC current through the corresponding motor phase inductor (i.e. one of the phase inductors **La, Lb, Lc).** An interleaved operation of the three legs of the inverter drive **106** is beneficial regarding to conduction losses and reduction of the output current ripple. For charging purposes, the active power switch **1108** offers a return path to the DC current. The active power switch **1108** enables synchronous rectification as well as the supply of a DC load (i.e. using the vehicle battery as power bank for a direct current load). It will be appreciated that the circuit shown in Figure 11 represents a configuration to which an on-board as shown in earlier Figures can be switched when it is desired to charge the battery of a vehicle having an on-board charger according to the disclosure of this application from a DC supply instead of from an AC supply, rather than being an alternative form of charger. The functionality represented by the configuration illustrated in Figure 11 is optional, as is that of Figure 10, but it is clearly desirable to provide an on-board charger that enables the charging of the battery of a battery-powered vehicle from any of a 3-phase AC, single-phase AC and DC power source.

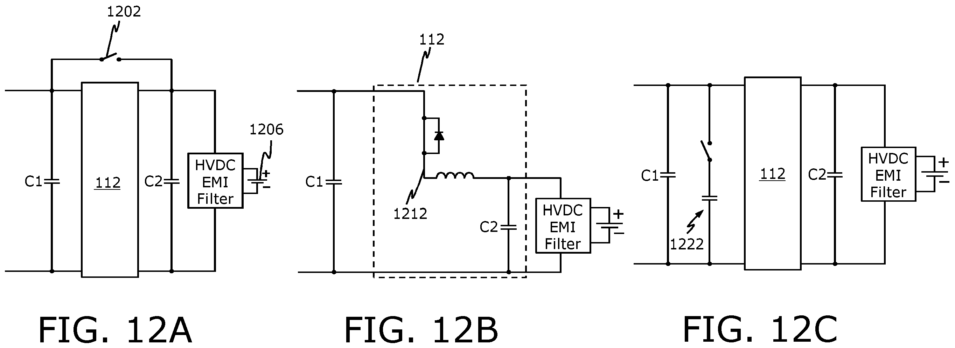

FIGs. 12A-12C, are circuit diagram representing various arrangements for a DC/DC converter for an on-board charger (such as the on-board chargers **102),** in accordance with various embodiment of the disclosure. In particular, FIGs. 12A-12C illustrate various arrangements for the DC/DC converters along with capacitors (such as the first and second capacitors C1 and C2) coupled in parallel to an input and an output of the DC/DC converters.

As shown in FIG. 12A, a switching device **1202** is provided to enable a DC/DC converter **112** to be bypassed while an AC machine (such as the AC machine **108)** is propelling the electric vehicle but not when a charger (such as the charger having such DC/DC converter arrangements) is providing charging current to the battery **1206** of the electric vehicle. In other words, the switching device **1202** is operable to bypass the DC/DC converter **112,** so the DC/DC converter **112** is used only in charging mode.

Referring now to FIG. 12B, illustrated is a DC/DC converter **112** which is configurable to provide an internal path **1212** for current to flow from an output stage of the DC/DC converter **112** to an AC machine (such as the AC machine **108** shown in earlier figures) in propulsion mode. In other words, relocating an available inverter drive dc-link with high capacitance (i.e. with capacitor **C2**) to the output of the DC/DC converter **112** and bypassing the DC/DC converter **112** internally during propulsion mode. In this way, a DC current flows through some of the components of the DC/DC converter **112,** i.e. the DC/DC converter **112** provides a simplified internal path **1212** for current flow.

Referring now to FIG. 12C, illustrated is a DC/DC converter **112** with an additional switchable DC-link capacitor **1222.** The switchable DC-link capacitor **1222** is connectable in parallel to the first capacitor **C1.** The capacitance of the switchable DC-link capacitor **1222** is summed with the first capacitor **C1** in propulsion mode, but not in charging mode. Accordingly, the DC/DC converter **112** can work in both propulsion and charging modes.

Another alternative to the options shown in Figures 12a to 12c, which is not illustrated, is to implement a highly dynamic DC/DC converter, so that the required energy from the first capacitor **C1** can be provided by the second capacitor **C2** in a timely manner. Therefore, the DC/DC converter works in both propulsion and charging modes.

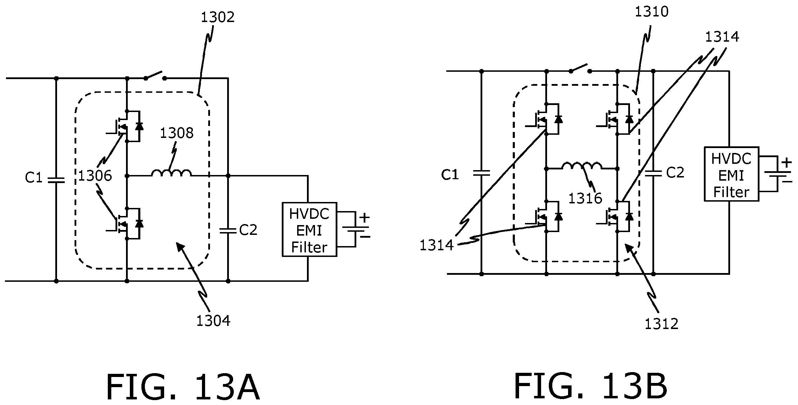

Referring now to FIG. 13A and 13B, illustrated are circuit diagrams of DC/DC converters, in accordance with various embodiments of the disclosure. According to an embodiment, the DC/DC converters are configured to support charging of nominally 400 volt batteries and to support charging of nominally 800 volt batteries. Further, the DC/DC converters includes an isolated DC/DC circuit for charging either nominally 400 volt batteries or nominally 800 volt batteries.

FIG. 13A, illustrates a DC/DC converter **1302** which includes a non-isolated step-down DC/DC circuit **1304** for charging nominally 400 volt batteries. As shown, the DC/DC circuit **1304** includes a pair of active switches **1306** and an inductor **1308.** In an example, using the step-down DC/DC converter **1302** as a back-end solution, limits the application to 400 volt battery voltages, whose upper operating limit is 470 volts according to the automotive standard.

FIG. 13B, illustrates a DC/DC converter **1310** which includes a non-isolated step-down/step-up DC/DC circuit **1312** for charging either nominally 400 volt batteries or nominally 800 volt batteries. In an example, the DC/DC circuit **1312** relates to a bidirectional Buck-Boost converter. As shown, the non-isolated step-down/step-up DC/DC circuit **1312** includes two branches, each branch having a pair of active switches **1314** and an inductor **1316** coupled to the two branches of the active switches **1314.** In an example, the DC/DC converter **1310** provides an operating voltage range that goes from to 450 volts to 770 volts.

The DC/DC converters **1302, 1310** of FIGs. 13A-13B are shown with a bypass arrangement using an external switching device (similar to the DC/DC converter **112,** shown and explained in FIG. 12A). This allows more flexibility in choosing the most suitable DC/DC converter without degrading or having any influence on the performance during propulsion mode.

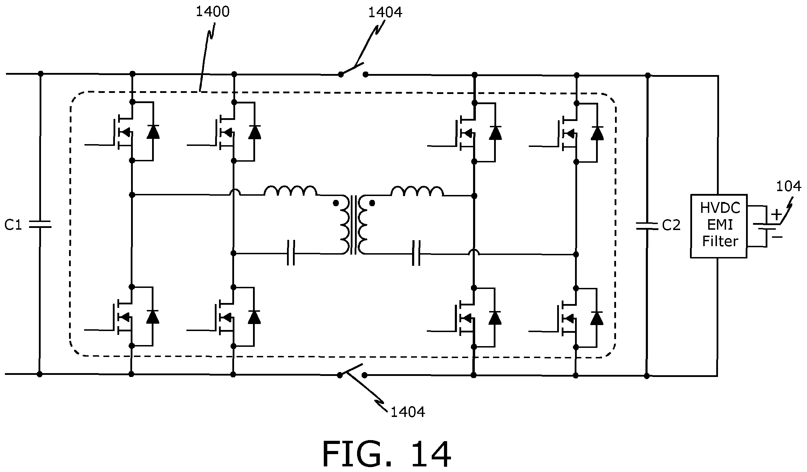

FIG. 14 is a circuit diagram of an isolated DC/DC converter, for use in an integrated charger in accordance with an embodiment of the disclosure. In this example, the isolated DC/DC converter uses CLLC resonant topology (indicated by the broken line labelled **1400).** In cases where galvanic isolation is required, the isolated DC/DC converter may be used as back-end (in place of the DC/DC converters described above), and an external switching arrangement, such as switches **1404,** may be used to bypass this additional stage. For example, during charging of the battery **104,** the switches **1404** are open and the isolated DC/DC converter is active, and during propulsion, the switches **1404** are closed and the isolated DC/DC converter is bypassed. As a result, compliance with safety requirements is easily enabled as well as the charging of both 400 and 800 volt batteries is enabled.

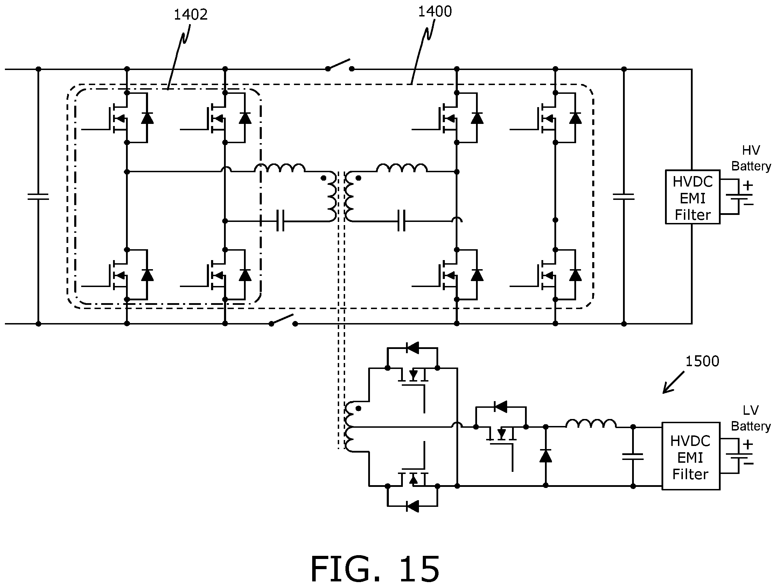

Referring now FIG. 15, illustrated is circuit diagram of an on-board power supply DC/DC converter in conjunction with the isolated DC/DC converter of FIG. 14, in accordance with an embodiment of the disclosure. In this example, the DC/DC converter may be termed an LDC converter as it interfaces both high and low voltage batteries. As shown, this can be merged into the isolated DC/DC converter (of FIG. 14), sharing the same transformer and the high voltage side power switches. The low voltage side may be implemented by several topologies. In FIG. 15 there is shown, the use of a centre-tapped rectifier with a built-in Buck. In operation, during both propulsion and charging mode, only one bridge side **1402** is actively controlled, while the other two remaining bridges operate passively with synchronous rectification capability.

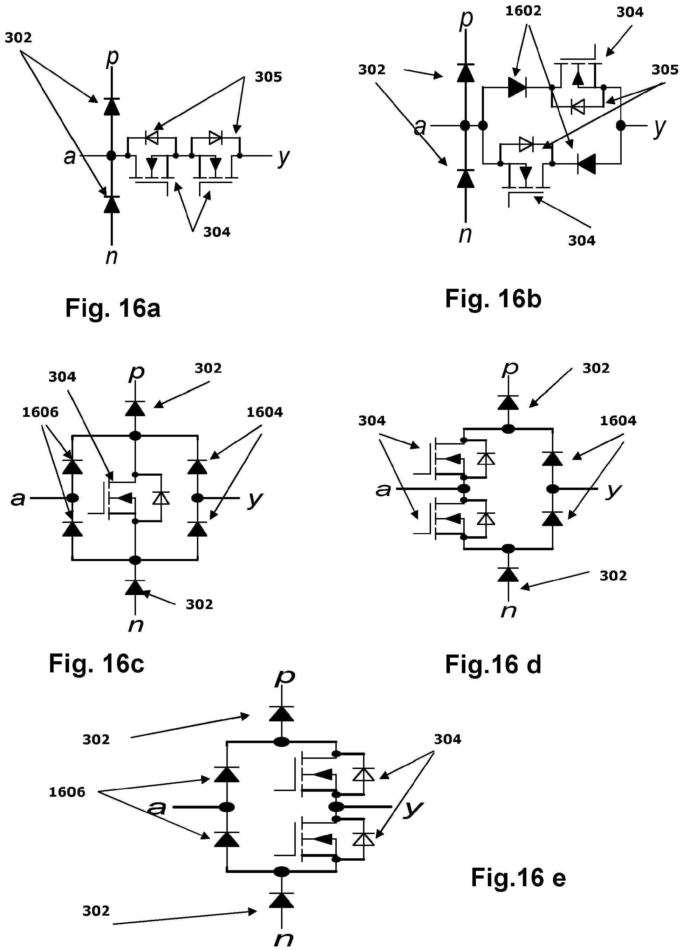

Referring now FIG. 16, illustrated are alternative circuit configurations suitable for use as a low frequency bridge leg of the integrated active filter 110 of Figure 3.

Figure 16a shows the arrangement illustrated in Figure 3, where each single low frequency bridge leg is composed of two active power switches **304** with antiparallel diodes **305** and two rectifier diodes **302,** with the switches presenting an anti-series connection. The two rectifier diodes **302** are series connected in the same sense, the cathode of one diode being coupled to the anode of the other. The point of interconnection a between the two rectifier diodes **302,** in use being connected to one of the phases of the power supply **202.** The two active power switches **304** are connected between the point of interconnection a between the two rectifier diodes **302** and a node **n** that is coupled to one or more phases **La, Lb,** or **Lc** of the AC machine **108.**

Figure 16b shows a low frequency bridge leg again composed of two series-connected rectifier diodes **302,** and two active power switches **304** with antiparallel diodes **305,** but in this case a further diode **1602** is connected in series with each of the two active power switches **304.** For each switch **304,** the diode **1602** that is connected in series is in the reverse sense to the antiparallel diode **305** of that switch. That is, the cathodes of the two diodes **305** and **1602** associated with a switch **304** are coupled together. In addition, each of the two switches **304** is connected between the anode of one of the diodes **1602** and the cathode of the other diode **1602** at point **a.** The point of interconnection a between the two rectifier diodes **302,** in use again being connected to one of the phases of the power supply **202.** In this configuration the switches don't need a body diode 305, so here a cheaper IGBT can be used instead of a MOSFET.

Figure 16c shows a low frequency bridge leg again composed of two series-connected rectifier diodes **302,** but instead of the cathode of one of these diodes being coupled to the anode of the other, an active power switch **304** is connected between them. The switch **304** has an anti-parallel diode **305** which is arranged in the same sense as the two rectifier diodes **302,** so that the anode of the antiparallel diode is coupled to the cathode of a first of the two rectifier diodes **302,** and the cathode of the anti-parallel diode is coupled to the anode of the other of the two rectifier diodes **302.** A first pair of additional diodes **1604** are series connected between the cathode of the one of the rectifier diodes **302** and the anode of the other, in parallel with the active power switch **304.** In addition, a second pair of additional diodes **1606** are also series connected between the cathode of the one of the rectifier diodes **302** and the anode of the other, in parallel with the active power switch **304.** With this arrangement, one of the phases of the power supply **202** is, during charging, connected to the coupled anode and cathode of the second pair of additional diodes **1606,** and one or more phases **La, Lb,** or **Lc** of the AC machine **108** is connected to the coupled anode and cathode of the first pair of additional diodes **1604.**

Figure 16d shows a circuit arrangement similar to that of Figure 16c except that the second additional pair of diodes **1606** is eliminated, and in place of the single active power switch **304** a series connected pair of active power switches is used. The two active power switches **304** are here connected in the same sense. With this arrangement, the point of interconnection **a** between the two active power switches **302,** is in use connected to one of the phases of the power supply **202.** As with the circuit arrangement of Figure 16c one or more phases **La, Lb,** or **Lc** of the AC machine **108** is connected to the coupled anode and cathode of the first pair of additional diodes **1604.**

Figure 16e shows a circuit arrangement very similar to that of Figure 16d, but in this case one or more phases **La, Lb,** or **Lc** of the AC machine **108** is connected to the junction between the two active power switches 304, and, in use one of the phases of the power supply **202** is connected to the coupled anode and cathode of the second pair of additional diodes **1606.**

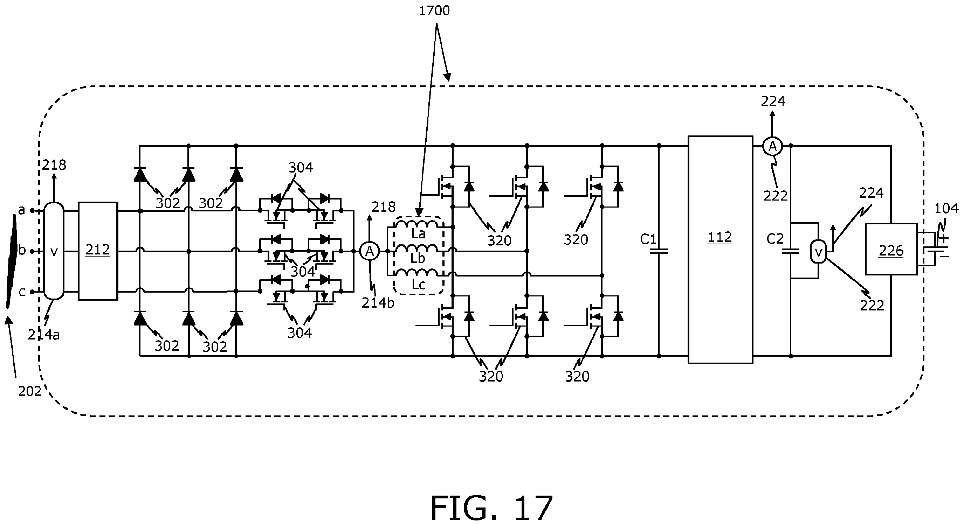

It will be appreciated that although the on board charger has thus far been described as including one or more inductors of the AC machine of a battery powered electric vehicle, as is the case once the on board charger has been integrated into a vehicle, it is likely that in many instances a manufacturer of battery powered vehicles will buy-in some subassemblies for the assembly of the electric vehicle rather than making or buying-in all the individual components required to build a vehicle. One such sub-assembly that is likely to be bought-in is an on-board charger module suitable for realising an on-board charger according to the disclosure, and such an on-board charger module for a vehicle, and the AC machine for the vehicle, are likely to be delivered as separate items - quite possibly from different suppliers. As such, it is to be expected that examples of on-board chargers according to the disclosure will be assembled from an on-board charger module that includes the integrated active filter rectifier **110** coupled to a DC/DC converter **112,** an inverter drive **106,** and EMI filters **212** and **226,** but which lacks the inductors of the AC machine **108.** Indeed, such a module may include all the elements shown as being included in the on-board charger of Figure 3 (or any of the other illustrated configurations), with the exception of the inductors of the AC machine **108,** as illustrated in Figure 17. The two broken line lozenges **1700** represent the outlines of one such module. Such an on board charger module is within the scope of the disclosure.

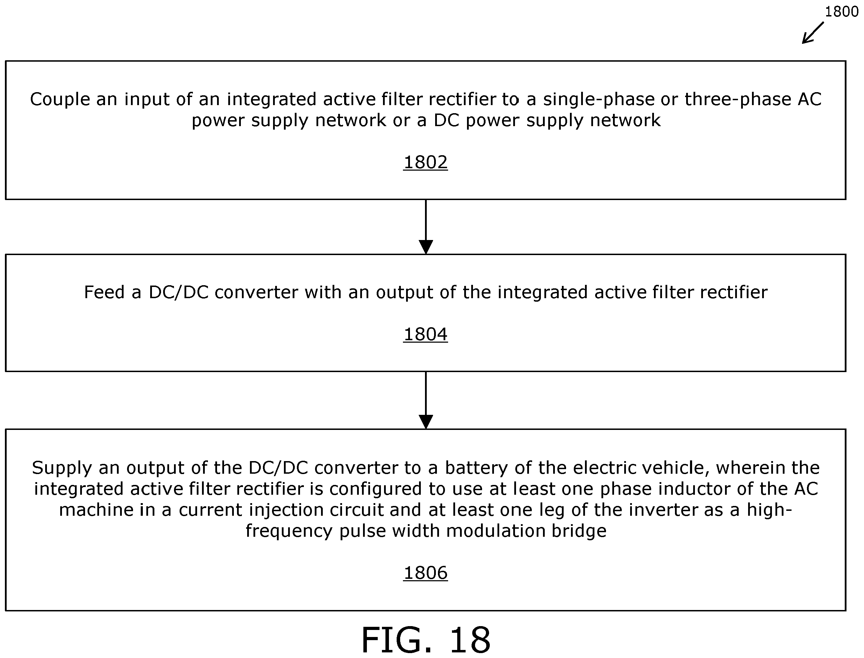

FIG. 18 is a flowchart of a method **1800** of charging a battery of an electric vehicle, in accordance with an embodiment of the disclosure. The method **1800** includes steps **1802** to **1806** for charging the battery of an electric vehicle that includes an AC machine, an inverter drive for the AC machine, and an on-board charger.

At step **1802,** an input of an integrated active filter rectifier is coupled to a single-phase or three-phase AC power supply network or a DC power supply network. At step **1804,** a DC/DC converter is fed with an output of the integrated active filter rectifier. At step **1806,** an output of the DC/DC converter is supplied to the battery of the electric vehicle. In the method **1800,** the integrated active filter rectifier is configured to use at least one phase inductor of the AC machine and at least one leg of the inverter drive to perform power factor correction.

The steps **1802** to **1806** are only illustrative and other alternatives can also be provided where one or more steps are added, or one or more steps are provided in a different sequence without departing from the scope of the claims herein.

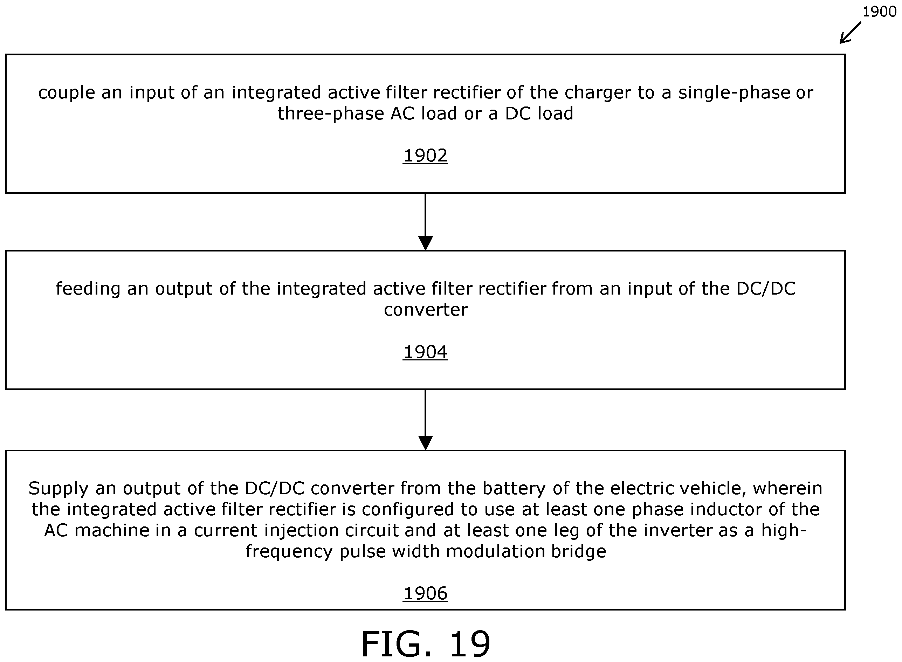

FIG. 19 is a flow chart of a method **1900** of using a battery of an electric vehicle as a power source for powering external loads, in accordance with an embodiment of the disclosure. The method **1900** includes steps **1902** to **1906** for using the battery of the electric vehicle as the power source for powering external loads. The electric vehicle including an AC machine, an inverter drive for the AC machine, and an on-board charger. The on-board charger includes an integrated active filter rectifier coupled to a DC/DC converter. The integrated active filter rectifier is configured to use at least one phase inductor of the AC machine and at least one leg of the inverter drive to perform power factor correction.

At step **1902,** an input of the integrated active filter rectifier is coupled to a single-phase or three-phase AC load or a DC load. At step **1804,** an output of the integrated active filter rectifier is fed from an input of the DC/DC converter. At step **1906,** an output of the DC/DC converter is supplied from the battery of the electric vehicle.

The steps **1902** to **1906** are only illustrative and other alternatives can also be provided where one or more steps are added, or one or more steps are provided in a different sequence without departing from the scope of the claims herein.

The disclosure provides an improved on-board charger which is a non-isolated converter that renders possible both operations of traction and charging from both single and three-phase grids.

Modifications to embodiments of the disclosure described in the foregoing are possible without departing from the scope of the claims.

## Claims

1. An on-board charger (102) for a battery (104) of an electric vehicle (100), wherein the electric vehicle (100) includes an AC machine (108) and an inverter drive (016) for the AC machine (108), the on-board charger (102) comprising:
an integrated active filter rectifier (110) coupled to a DC/DC converter (112), the output of the DC/DC converter (112) is supplied to the battery (104);
wherein the integrated active filter rectifier (110) is configured to use at least one phase inductor (La, Lb, Lc) of the AC machine (108) and at least one leg of the inverter drive (106) to perform power factor correction;
**characterized in that**
the on-board charger (102) is configured to support charging from any one of a three-phase AC power source, a single-phase power source and a DC power source;
wherein the integrated active filter rectifier (110) includes one pair of diodes (302) for each phase of a three-phase mains power supply and a pair of active power switches (304) for each phase of the three-phase mains power supply as branches of the active filter rectifier (110), each pair of active power switches (304) being connected between a phase of the mains power supply and a common point of the AC machine phase inductors (La, Lb, Lc);
and each branch being connectable to a respective phase of the three-phase AC power source; wherein the single-phase power source is connectable between a neutral and one of the branches; and
wherein the DC power source is connectable between the neutral and one of the branches, the active power switches of the connected branch configured to be turned on, and at least one leg of the inverter drive (106) is configured to be modulated.

2. The on-board charger (102) of claim 1, wherein the integrated active filter rectifier (110) includes at least one pair of diodes (302) for each phase of a three-phase mains power supply (202).

3. The on-board charger (102) of claim 2, wherein the integrated active filter rectifier (110) includes an active power switch (906) in parallel with each of the diodes (302).

4. The on-board charger (102) of claim 1, wherein the integrated active filter rectifier (110) includes a pair of active power switches (304) for each phase (a, b, c) of a three-phase mains power supply (202), and each of the pairs of active power switches (304) are coupled together at a common point (310), the common point (310) being coupled to a neutral terminal (312) of the AC machine (108).

5. The on-board charger (102) of claim 1, wherein the integrated active filter rectifier (110) includes a pair of active power switches (304) for each phase (a, b, c) of a three-phase mains power supply (202), and each of the pairs of active power switches (304) are coupled together at a common point (702), the common point (702) being coupled to one of the phases (La, Lb, Lc) of the AC machine (108).

6. The on-board charger (102) according to any one of the preceding claims, further comprising a first capacitor (C1) connected across an input of the DC/DC converter (112), wherein the first capacitor (C1) is configured to support commutation of switches (320) of the inverter drive (106).

7. The on-board charger (102) of claim 6, wherein the on-board charger (102) is so configured that a second capacitor (C2) having a greater capacitance than the first capacitor (C1) is connected in parallel with the first capacitor (C1) while the AC machine (108) is in propulsion mode.

8. The on-board charger (102) according to any one of claims 1 to 7, wherein the DC/DC converter (112) is configurable to provide an internal path (1212) for current to flow from an output stage of the DC/DC converter (112) to the AC machine (108) in propulsion mode.

9. The on-board charger (102) according to any one of claims 1 to 7, wherein a switching device (1202) is provided to enable the DC/DC converter (112) to be bypassed while the AC machine (108) is propelling the electric vehicle (100) whereas the DC/DC converter (112) is used during charging of the battery (104). [0026]

10. The on-board charger (102) according to any one of claims 1 to 5, wherein a capacitor (C2) is coupled across the output of the DC/DC converter (112), and the DC/DC converter (112) is configured to supply energy from the capacitor (C2) to the output of the first stage of the on-board charger (102) during charging.

11. The on-board charger (102) of claim 1, wherein the on-board charger (102) is configured to support charging from the single-phase AC power supply (1002) by using elements (1008, 1006) of the integrated active filter rectifier (110) as a bridgeless totem-pole power factor correction rectifier (1004),
wherein the on-board charger (102) includes a control arrangement (218) to modulate at least one leg of the bridge at high frequency to generate a sinusoidal current through a corresponding phase inductor (La) of the AC machine (108).

12. The on-board charger (102) of claim 1, wherein the on-board charger is configured to support charging from the DC power supply (1102) by using elements of the integrated active filter rectifier (110) as a DC/DC converter.

13. A method (1600) of charging a battery (104) of an electric vehicle (100) that includes an AC machine (108), an inverter drive (106) for the AC machine (108), and an on-board charger (102), the method comprising:
coupling an input of an integrated active filter rectifier (110) to a single-phase (1002) or three-phase AC power supply network (202);
feeding a DC/DC converter (112) with an output of the integrated active filter rectifier (110); supplying an output of the DC/DC converter (112) to a battery (104) of the electric vehicle (100);
wherein the integrated active filter rectifier (110) is configured to use at least one phase inductor (La, Lb, Lc) of the AC machine (108) and at least one leg of the inverter drive (106) to perform power factor correction;
wherein the on-board charger (102) is configured to support charging from any one of a three-phase AC power source, a single-phase power source and a DC power source;
**characterized in that**
the integrated active filter rectifier (110) includes one pair of diodes (302) for each phase of a three-phase mains power supply and a pair of active power switches (304) for each phase of the three-phase mains power supply as branches of the active filter rectifier (110), each pair of active power switches (304) being connected between a phase of the mains power supply and a common point of the AC machine phase inductors (La, Lb, Lc);
and each branch being connectable to a respective phase of the three-phase AC power source; wherein the single-phase power source is connectable between a neutral and one of the branches; and
wherein the DC power source is connectable between the neutral and one of the branches, the active power switches of the connected branch configured to be turned on, and at least one leg of the inverter drive (106) is configured to be modulated.

14. A method (1700) of using a battery (104) of an electric vehicle (100) as a power source for powering external loads, the electric vehicle (100) including an AC machine (108), an inverter drive (106) for the AC machine (108), and an on-board charger (102), the on-board charger (102) including:
an integrated active filter rectifier (110) coupled to a DC/DC converter (112), the DC/DC converter (112) is connected to the battery (104);
wherein the integrated active filter rectifier (100) is configured to use at least one phase inductor (La, Lb, Lc) of the AC machine (108) and at least one leg of the inverter drive (106) to perform power factor correction;
the method comprising:
coupling an input of the integrated active filter rectifier (110) to a single-phase or three-phase AC load or a DC load;
feeding an output of the integrated active filter rectifier from an input of the DC/DC converter (112); and
supplying an output of the DC/DC converter (112) from the battery (104) of the electric vehicle (100);
**characterized in that**
the on-board charger (102) is configured to support charging from any one of a three-phase AC power source, a single-phase power source and a DC power source;
wherein the integrated active filter rectifier (110) includes one pair of diodes (302) for each phase of a three-phase mains power supply and a pair of active power switches (304) for each phase of the three-phase mains power supply as branches of the active filter rectifier (110), each pair of active power switches (304) being connected between a phase of the mains power supply and a common point of the AC machine phase inductors (La, Lb, Lc);
and each branch being connectable to a respective phase of the three-phase AC power source;
wherein the single-phase power source is connectable between a neutral and one of the branches; and
wherein the DC power source is connectable between the neutral and one of the branches, the active power switches of the connected branch configured to be turned on, and at least one leg of the inverter drive (106) is configured to be modulated.

## Patentansprüche

1. Bordladegerät (102) für eine Batterie (104) eines Elektrofahrzeugs (100), wobei das Elektrofahrzeug (100) eine Wechselstrommaschine (108) und einen Wechselrichterantrieb (016) für die Wechselstrommaschine (108) beinhaltet, wobei das Bordladegerät (102) umfasst:
einen Gleichrichter (110) mit integriertem aktiven Filter, der an einen DC/DC-Wandler (112) gekoppelt ist, wobei der Ausgang des DC/DC-Wandlers (112) der Batterie (104) zugeführt wird;
wobei der Gleichrichter (110) mit integriertem aktiven Filter dazu konfiguriert ist, mindestens einen Phaseninduktor (La, Lb, Lc) der Wechselstrommaschine (108) und mindestens einen Zweig des Wechselrichterantriebs (106) zu verwenden, um eine Leistungsfaktorkorrektur durchzuführen;
**dadurch gekennzeichnet, dass**
das Bordladegerät (102) dazu konfiguriert ist, das Laden von einer dreiphasigen Wechselstromquelle, einer einphasigen Stromquelle oder einer Gleichstromquelle zu unterstützen;
wobei der Gleichrichter (110) mit integriertem aktiven Filter ein Paar Dioden (302) für jede Phase einer dreiphasigen Netzstromversorgung und ein Paar aktive Leistungsschalter (304) für jede Phase der dreiphasigen Netzstromversorgung als Verzweigungen des aktiven Filtergleichrichters (110) beinhaltet, wobei jedes Paar aktive Leistungsschalter (304) zwischen eine Phase der Netzstromversorgung und einen gemeinsamen Punkt der Phaseninduktoren (La, Lb, Lc) der Wechselstrommaschine geschaltet ist;
und jede Verzweigung mit einer entsprechenden Phase der dreiphasigen Wechselstromquelle verbindbar ist;
wobei die einphasige Stromquelle zwischen einem Neutralleiter und einer der Verzweigungen verbindbar ist; und
wobei die Gleichstromquelle zwischen dem Neutralleiter und
einer der Verzweigungen verbindbar ist, die aktiven Leistungsschalter des angeschlossenen Zweigs dazu konfiguriert sind, eingeschaltet zu werden, und mindestens ein Zweig des Wechselrichterantriebs (106) dazu konfiguriert ist, moduliert zu werden.

2. Bordladegerät (102) nach Anspruch 1, wobei der Gleichrichter (110) mit integriertem aktiven Filter mindestens ein Paar Dioden (302) für jede Phase einer dreiphasigen Netzstromversorgung (202) beinhaltet.

3. Bordladegerät (102) nach Anspruch 2, wobei der Gleichrichter (110) mit integriertem aktiven Filter einen aktiven Leistungsschalter (906) parallel zu jeder der Dioden (302) beinhaltet.

4. Bordladegerät (102) nach Anspruch 1, wobei der Gleichrichter (110) mit integriertem aktiven Filter ein Paar aktive Leistungsschalter (304) für jede Phase (a, b, c) eines dreiphasigen Netzstromversorgung (202) beinhaltet und jedes der Paare aktiver Leistungsschalter (304) an einem gemeinsamen Punkt (310) aneinander gekoppelt ist, wobei der gemeinsame Punkt (310) an einen Neutralleiteranschluss (312) der Wechselstrommaschine (108) gekoppelt ist.

5. Bordladegerät (102) nach Anspruch 1, wobei der Gleichrichter (110) mit integriertem aktiven Filter ein Paar aktive Leistungsschalter (304) für jede Phase (a, b, c) eines dreiphasigen Netzstromversorgung (202) beinhaltet und jedes der Paare aktiver Leistungsschalter (304) an einem gemeinsamen Punkt (702) aneinander gekoppelt ist, wobei der gemeinsame Punkt (702) an eine der Phasen (La, Lb, Lc) der Wechselstrommaschine (108) gekoppelt ist.

6. Bordladegerät (102) nach einem der vorhergehenden Ansprüche, ferner umfassend einen ersten Kondensator (C1), der an einem Eingang des DC/DC-Wandlers (112) verbunden ist, wobei der erste Kondensator (C1) zum Unterstützen der Kommutierung von Schaltern (320) des Wechselrichterantriebs (106) konfiguriert ist.

7. Bordladegerät (102) nach Anspruch 6, wobei das Bordladegerät (102) so konfiguriert ist, dass ein zweiter Kondensator (C2) mit einer größeren Kapazität als der erste Kondensator (C1) parallel zu dem ersten Kondensator (C1) geschaltet ist, während sich die Wechselstrommaschine (108) im Antriebsmodus befindet.

8. Bordladegerät (102) nach einem der Ansprüche 1 bis 7, wobei der DC/DC-Wandler (112) dazu konfigurierbar ist, im Antriebsmodus einen internen Verlauf (1212) für den Stromfluss von einer Ausgangsstufe des DC/DC-Wandlers (112) an die Wechselstrommaschine (108) bereitzustellen.

9. Bordladegerät (102) nach einem der Ansprüche 1 bis 7, wobei eine Schaltvorrichtung (1202) bereitgestellt ist, um eine Überbrückung des DC/DC-Wandlers (112) zu ermöglichen, wenn die Wechselstrommaschine (108) das Elektrofahrzeug (100) antreibt, während der DC/DC-Wandler (112) während des Ladens der Batterie (104) verwendet wird. [0026]

10. Bordladegerät (102) nach einem der Ansprüche 1 bis 5, wobei ein Kondensator (C2) über den Ausgang des DC/DC-Wandlers (112) gekoppelt ist und der DC/DC-Wandler (112) dazu konfiguriert ist, während des Ladevorgangs Energie von dem Kondensator (C2) an den Ausgang der ersten Stufe des Bordladegeräts (102) zu liefern.

11. Bordladegerät (102) nach Anspruch 1, wobei das Bordladegerät (102) dazu konfiguriert ist, das Laden von der einphasigen Wechselstromversorgung (1002) unter Verwendung von Elementen (1008, 1006) des Gleichrichters mit integriertem aktiven Filter (110) als brückenloser Totempole-Leistungsfaktorkorrekturgleichrichter (1004) zu unterstützen, wobei das Bordladegerät (102) eine Steueranordnung (218) beinhaltet, um mindestens einen Zweig der Brücke mit hoher Frequenz zu modulieren, um einen sinusförmigen Strom durch einen entsprechenden Phaseninduktor (La) der Wechselstrommaschine (108) zu erzeugen.

12. Bordladegerät (102) nach Anspruch 1, wobei das Bordladegerät dazu konfiguriert ist, das Laden über die Gleichstromversorgung (1102) zu unterstützen, indem Elemente des Gleichrichters mit integriertem aktiven Filter (110) als DC/DC-Wandler verwendet werden.

13. Verfahren (1600) zum Laden einer Batterie (104) eines Elektrofahrzeugs (100), das eine Wechselstrommaschine (108), einen Wechselrichterantrieb (106) für die Wechselstrommaschine (108) und ein Bordladegerät (102) beinhaltet, wobei das Verfahren umfasst:
Koppeln eines Eingangs eines Gleichrichters (110) mit integriertem aktiven Filter an ein einphasiges (1002) oder dreiphasiges Wechselstromnetz (202);
Speisen eines DC/DC-Wandlers (112) mit einem Ausgang des Gleichrichters (110) mit integriertem aktiven Filter;
Liefern eines Ausgangs des DC/DC-Wandlers (112) an eine Batterie (104) des Elektrofahrzeugs (100);
wobei der Gleichrichter (110) mit integriertem aktiven Filter dazu konfiguriert ist, mindestens einen Phaseninduktor (La, Lb, Lc) der Wechselstrommaschine (108) und mindestens einen Zweig des Wechselrichterantriebs (106) zu verwenden, um eine Leistungsfaktorkorrektur durchzuführen;
wobei das Bordladegerät (102) dazu konfiguriert ist, das Laden von einer dreiphasigen Wechselstromquelle, einer einphasigen Stromquelle oder einer Gleichstromquelle zu unterstützen;
**dadurch gekennzeichnet, dass**
der Gleichrichter (110) mit integriertem aktiven Filter ein Paar Dioden (302) für jede Phase einer dreiphasigen Netzstromversorgung und ein Paar aktive Leistungsschalter (304) für jede Phase einer dreiphasigen Netzstromversorgung als Verzweigungen des aktiven Filtergleichrichters (110) beinhaltet, wobei jedes Paar aktive Leistungsschalter (304) zwischen eine Phase der Netzstromversorgung und einen gemeinsamen Punkt der Phaseninduktoren (La, Lb, Lc) der Wechselstrommaschine geschaltet ist;
und jede Verzweigung mit einer entsprechenden Phase der dreiphasigen Wechselstromquelle verbindbar ist;
wobei die einphasige Stromquelle zwischen einem Neutralleiter und einer der Verzweigungen verbindbar ist; und
wobei die Gleichstromquelle zwischen dem Neutralleiter und einer der Verzweigungen verbindbar ist, die aktiven Leistungsschalter des angeschlossenen Zweigs dazu konfiguriert sind, eingeschaltet zu werden, und mindestens ein Zweig des Wechselrichterantriebs (106) dazu konfiguriert ist, moduliert zu werden.

14. Verfahren (1700) zur Verwendung einer Batterie (104) eines Elektrofahrzeugs (100) als Stromquelle zum Betreiben externer Lasten, wobei das Elektrofahrzeug (100) eine Wechselstrommaschine (108), einen Wechselrichterantrieb (106) für die Wechselstrommaschine (108) und ein Bordladegerät (102) beinhaltet, wobei das Bordladegerät (102) umfasst:
einen Gleichrichter (110) mit integriertem aktiven Filter, der an einen DC/DC-Wandler (112) gekoppelt ist, wobei der DC/DC-Wandler (112) mit der Batterie (104) verbunden ist;
wobei der Gleichrichter (100) mit integriertem aktiven Filter dazu konfiguriert ist, mindestens einen Phaseninduktor (La, Lb, Lc) der Wechselstrommaschine (108) und mindestens einen Zweig des Wechselrichterantriebs (106) zu verwenden, um eine Leistungsfaktorkorrektur durchzuführen;
wobei das Verfahren umfasst:
Koppeln eines Eingangs des Gleichrichters mit integriertem aktiven Filter (110) an eine einphasige oder dreiphasige Wechselstromlast oder eine Gleichstromlast;
Speisen eines Ausgangs des Gleichrichters mit integriertem aktiven Filter von einem Eingang des DC/DC-Wandlers (112); und Liefern eines Ausgangs des DC/DC-Wandlers (112) aus der Batterie (104) des Elektrofahrzeugs (100);
**dadurch gekennzeichnet, dass**
das Bordladegerät (102) dazu konfiguriert ist, das Laden von einer dreiphasigen Wechselstromquelle, einer einphasigen Stromquelle oder einer Gleichstromquelle zu unterstützen;
wobei der Gleichrichter (110) mit integriertem aktiven Filter ein Paar Dioden (302) für jede Phase einer dreiphasigen Netzstromversorgung und ein Paar aktive Leistungsschalter (304) für jede Phase der dreiphasigen Netzstromversorgung als Verzweigungen des aktiven Filtergleichrichters (110) beinhaltet, wobei jedes Paar aktive Leistungsschalter (304) zwischen eine Phase der Netzstromversorgung und einen gemeinsamen Punkt der Phaseninduktoren (La, Lb, Lc) der Wechselstrommaschine geschaltet ist;
und jede Verzweigung mit einer entsprechenden Phase der dreiphasigen Wechselstromquelle verbindbar ist;
wobei die einphasige Stromquelle zwischen einem Neutralleiter und einer der Verzweigungen verbindbar ist; und
wobei die Gleichstromquelle zwischen dem Neutralleiter und einer der Verzweigungen verbindbar ist, die aktiven Leistungsschalter des angeschlossenen Zweigs dazu konfiguriert sind, eingeschaltet zu werden, und mindestens ein Zweig des Wechselrichterantriebs (106) dazu konfiguriert ist, moduliert zu werden.

## Revendications

1. Chargeur embarqué (102) pour batterie (104) de véhicule électrique (100), dans lequel le véhicule électrique (100) comporte une machine à CA (108) et une commande d'onduleur (016) pour la machine à CA (108), le chargeur embarqué (102) comprenant :
un redresseur à filtre actif intégré (110) couplé à un convertisseur CC/CC (112), la sortie du convertisseur CC/CC (112) est fournie à la batterie (104) ;
dans lequel le redresseur à filtre actif intégré (110) est configuré pour utiliser au moins un inducteur de phase (La, Lb, Lc) de la machine à CA (108) et au moins une branche de la commande d'onduleur (106) pour réaliser une correction de facteur de puissance ;
**caractérisé en ce que**
le chargeur embarqué (102) est configuré pour prendre en charge la charge à partir d'une quelconque parmi une source d'alimentation CA triphasée, une source d'alimentation monophasée et une source d'alimentation CC ;
dans lequel le redresseur à filtre actif intégré (110) comporte une paire de diodes (302) pour chaque phase d'une alimentation secteur triphasée et une paire de commutateurs de puissance active (304) pour chaque phase de l'alimentation principale triphasée en tant que dérivations du redresseur à filtre actif (110), chaque paire de commutateurs de puissance active (304) étant connectée entre une phase de l'alimentation principale et un point commun des inducteurs de phase de la machine à CA (La, Lb, Lc) ;
et chaque dérivation pouvant être connectée à une phase respective de la source d'alimentation CA triphasée ;
dans lequel la source d'alimentation monophasée peut être connectée entre un neutre et l'une des dérivations ; et
dans lequel la source d'alimentation CC peut être connectée entre le neutre et l'une des dérivations, les commutateurs de puissance active de la dérivation connectée étant configurés pour être activés, et au moins une branche de la commande d'onduleur (106) est configurée pour être modulée.

2. Chargeur embarqué (102) selon la revendication 1, dans lequel le redresseur à filtre actif intégré (110) comporte au moins une paire de diodes (302) pour chaque phase d'une alimentation secteur triphasée (202).

3. Chargeur embarqué (102) selon la revendication 2, dans lequel le redresseur à filtre actif intégré (110) comporte un commutateur de puissance active (906) en parallèle de chacune des diodes (302).

4. Chargeur embarqué (102) selon la revendication 1, dans lequel le redresseur à filtre actif intégré (110) comporte une paire de commutateurs de puissance active (304) pour chaque phase (a, b, c) d'une alimentation secteur triphasée (202), et chacune des paires de commutateurs de puissance active (304) sont couplées ensemble en un point commun (310), le point commun (310) étant couplé à une borne neutre (312) de la machine à CA (108).

5. Chargeur embarqué (102) selon la revendication 1, dans lequel le redresseur à filtre actif intégré (110) comprend une paire de commutateurs de puissance active (304) pour chaque phase (a, b, c) d'une alimentation secteur triphasée (202), et chacune des paires de commutateurs de puissance active (304) sont couplées ensemble en un point commun (702), le point commun (702) étant couplé à l'une des phases (La, Lb, Lc) de la machine à CA (108).

6. Chargeur embarqué (102) selon l'une quelconque des revendications précédentes, comprenant également un premier condensateur (C1) connecté à une entrée du convertisseur CC/CC (112), dans lequel le premier condensateur (C1) est configuré pour prendre en charge la commutation des commutateurs (320) de la commande d'onduleur (106).

7. Chargeur embarqué (102) selon la revendication 6, dans lequel le chargeur embarqué (102) est configuré de sorte qu'un second condensateur (C2) ayant une capacité supérieure à celle du premier condensateur (C1) est connecté en parallèle au premier condensateur (C1) tandis que la machine à CA (108) est en mode propulsion.

8. Chargeur embarqué (102) selon l'une quelconque des revendications 1 à 7, dans lequel le convertisseur CC/CC (112) peut être configuré pour fournir un chemin interne (1212) pour que le courant circule depuis un étage de sortie du convertisseur CC/CC (112) vers la machine à CA (108) en mode propulsion.

9. Chargeur embarqué (102) selon l'une quelconque des revendications 1 à 7, dans lequel un dispositif de commutation (1202) est prévu pour permettre de contourner le convertisseur CC/CC (112) pendant que la machine à CA (108) propulse le véhicule électrique (100) tandis que le convertisseur CC/CC (112) est utilisé pendant la charge de la batterie (104). [0026]

10. Chargeur embarqué (102) selon l'une quelconque des revendications 1 à 5, dans lequel un condensateur (C2) est couplé à la sortie du convertisseur CC/CC (112), et le convertisseur CC/CC (112) est configuré pour fournir de l'énergie du condensateur (C2) à la sortie du premier étage du chargeur embarqué (102) pendant la charge.

11. Chargeur embarqué (102) selon la revendication 1, dans lequel le chargeur embarqué (102) est configuré pour prendre en charge la charge à partir de l'alimentation CA monophasée (1002) à l'aide d'éléments (1008, 1006) du redresseur à filtre actif intégré (110) tels qu'un redresseur de correction de facteur de puissance de totem-pôle sans pont (1004),
dans lequel le chargeur embarqué (102) comprend un agencement de commande (218) pour moduler au moins une branche du pont à haute fréquence afin de générer un courant sinusoïdal à travers un inducteur de phase correspondant (La) de la machine à CA (108) .

12. Chargeur embarqué (102) selon la revendication 1, dans lequel le chargeur embarqué est configuré pour prendre en charge la charge à partir de l'alimentation CC (1102) à l'aide d'éléments du redresseur à filtre actif intégré (110) comme convertisseur CC/CC.

13. Procédé (1600) de charge de batterie (104) de véhicule électrique (100) qui comporte une machine à CA (108), une commande d'onduleur (106) pour la machine à CA (108) et un chargeur embarqué (102), le procédé comprenant :
le couplage d'une entrée d'un redresseur à filtre actif intégré (110) à un réseau (202) d'alimentation électrique CA monophasé (1002) ou triphasé ;
l'alimentation d'un convertisseur CC/CC (112) avec une sortie du redresseur à filtre actif intégré (110) ;
la fourniture d'une sortie du convertisseur CC/CC (112) à une batterie (104) du véhicule électrique (100) ;
dans lequel le redresseur à filtre actif intégré (110) est configuré pour utiliser au moins un inducteur de phase (La, Lb, Lc) de la machine à CA (108) et au moins une branche de la commande d'onduleur (106) pour réaliser une correction de facteur de puissance ;
dans lequel le chargeur embarqué (102) est configuré pour prendre en charge la charge à partir d'une quelconque parmi une source d'alimentation CA triphasée, une source d'alimentation monophasée et une source d'alimentation CC ;
**caractérisé en ce que**
le redresseur à filtre actif intégré (110) comporte une paire de diodes (302) pour chaque phase d'une alimentation secteur triphasée et une paire de commutateurs de puissance active (304) pour chaque phase de l'alimentation principale triphasée en tant que dérivations du redresseur à filtre actif (110), chaque paire de commutateurs de puissance active (304) étant connectée entre une phase de l'alimentation principale et un point commun des inducteurs de phase de la machine à CA (La, Lb, Lc) ;
et chaque dérivation pouvant être connectée à une phase respective de la source d'alimentation CA triphasée ;
dans lequel la source d'alimentation monophasée peut être connectée entre un neutre et l'une des dérivations ; et
dans lequel la source d'alimentation CC peut être connectée entre le neutre et l'une des dérivations, les commutateurs de puissance active de la dérivation connectée étant configurés pour être activés, et au moins une branche de la commande d'onduleur (106) est configurée pour être modulée.

14. Procédé (1700) d'utilisation de batterie (104) de véhicule électrique (100) comme source d'énergie pour alimenter des charges externes, le véhicule électrique (100) comportant une machine à CA (108), une commande d'onduleur (106) pour la machine à CA (108), et un chargeur embarqué (102), le chargeur embarqué (102) comportant :
un redresseur à filtre actif intégré (110) couplé à un convertisseur CC/CC (112), le convertisseur CC/CC (112) étant connecté à la batterie (104) ;
dans lequel le redresseur à filtre actif intégré (100) est configuré pour utiliser au moins un inducteur de phase (La, Lb, Lc) de la machine à CA (108) et au moins une branche de la commande d'onduleur (106) pour réaliser une correction de facteur de puissance ;
le procédé comprenant :
le couplage d'une entrée du redresseur à filtre actif intégré (110) à une charge CA monophasée ou triphasée ou à une charge CC ;
l'alimentation d'une sortie du redresseur à filtre actif intégré à partir d'une entrée du convertisseur CC/CC (112) ; et
la fourniture d'une sortie du convertisseur CC/CC (112) à partir de la batterie (104) du véhicule électrique (100) ;
**caractérisé en ce que**
le chargeur embarqué (102) est configuré pour prendre en charge la charge à partir d'une quelconque parmi une source d'alimentation CA triphasée, une source d'alimentation monophasée et une source d'alimentation CC ;
dans lequel le redresseur à filtre actif intégré (110) comporte une paire de diodes (302) pour chaque phase d'une alimentation secteur triphasée et une paire de commutateurs de puissance active (304) pour chaque phase de l'alimentation principale triphasée en tant que dérivations du redresseur à filtre actif (110), chaque paire de commutateurs de puissance active (304) étant connectée entre une phase de l'alimentation principale et un point commun des inducteurs de phase de la machine à CA (La, Lb, Lc) ;
et chaque dérivation pouvant être connectée à une phase respective de la source d'alimentation CA triphasée ;
dans lequel la source d'alimentation monophasée peut être connectée entre un neutre et l'une des dérivations ; et
dans lequel la source d'alimentation CC peut être connectée entre le neutre et l'une des dérivations, les commutateurs de puissance active de la dérivation connectée étant configurés pour être activés, et au moins une branche de la commande d'onduleur (106) est configurée pour être modulée.
